**Europäisches Patentamt**

**European Patent Office**

**Office européen des brevets**

(11) Veröffentlichungsnummer: **0 400 285**
**A2**

# EUROPÄISCHE PATENTANMELDUNG

(21) Anmeldenummer: **90105054.2**

(22) Anmeldetag: **17.03.90**

(51) Int. Cl.⁵: **A01B 59/048**

(30) Priorität: **27.05.89 DE 8906546 U**

(43) Veröffentlichungstag der Anmeldung:
**05.12.90 Patentblatt 90/49**

(84) Benannte Vertragsstaaten:
**AT DE FR NL**

(71) Anmelder: **Fella-Werke GmbH**
**Fellastrasse 2**
**D-8501 Feucht(DE)**

(72) Erfinder: **Pürrer, Josef**
**Andreas-Schramm-Strasse 33**
**D-8501 Feucht(DE)**
Erfinder: **Lindner, Helmut**
**Fuchsstrasse 5**
**D-8508 Wendelstein(DE)**

(74) Vertreter: **Patentanwälte Czowalla . Matschkur**
**+ Partner**
**Dr.-Kurt-Schumacher-Strasse 23 Postfach**
**9109**
**D-8500 Nürnberg 11(DE)**

(54) **Vorrichtung zum Anbau eines Mähwerks.**

(57) Die Erfindung richtet sich auf eine Vorrichtung zum Anbau eines ziehend betriebenen Mähwerks an dem Dreipunktbock eines Schleppers über entgegen der Fahrrichtung schräg nach unten zu dem Mähwerk verlaufende abgefederte Lenker, wobei an dem Dreipunktbock ein beidseitig weit auskragender Querträger angeordnet ist, der an jedem äußeren Ende einen in Fahrrichtung weisenden Tragarm trägt, an dessen freiem Ende ein das Mähwerk führender Lenker angreift.

FIG. 1

**EP 0 400 285 A2**

## Vorrichtung zum Anbau eines Mähwerks

Die Erfindung richtet sich auf eine Vorrichtung zum Anbau eines ziehend betriebenen Mähwerks an dem Dreipunktbock eines Schleppers über entgegen der Fahrrichtung schräg nach unten zu dem Mähwerk verlaufende abgefederte Lenker.

Um gleichzeitig mähen und das gemähte Gut auf ein am Schlepper angehängtes Fahrzeug laden zu können, hat man Mähwerke so ausgebildet, daß sie an die Fronthydraulik des Schleppers angebaut werden können. Zunächst hat man diese Mähwerke schiebend betrieben, und das Mähwerk konnte sich einigermaßen den natürlichen Bodenunebenheiten anpassen. Allerdings ist die Anpassungsfähigkeit gegenüber einem an Heck des Schleppers angebauten gezogenen Mähwerk ungünstiger, und es besteht die Gefahr, daß insbesondere bei höheren Fahrgeschwindigkeiten die einzelnen Schneidelemente des Mähwerks, z.B. Mähtrommeln, in eine Bodenwelle einstechen und dadurch beschädigt werden. Um diesem Problem abzuhelfen, hat man dem Dreipunktbock eine Tragvorrichtung vorgesetzt, die es ermöglicht, das Mähwerk ziehend zu betreiben. Bekannte Bauformen befestigen an dem Dreipunktbock einen nach vorn vorkragenden Profilträger, an dessen freiem Ende ein Mähwerk über abgefederte Lenker angebaut worden ist. Am Kopf des Profilträgers sind an einem Querträger Schwingarme gelagert, die das Mähwerk führen und tragen. Zugleich angeordnete Entlastungsfedern und Hubzylinder ermöglichen unabhängig vom Ausheben des Dreipunktsystems ein Anheben des Mähwerks in eine Transportlage. Die Breite des Querträgers ist entsprechend der vorgegebenen relativ geringen Breite des Dreipunktbockes begrenzt. Infolgedessen liegen die das Mähwerk führenden Schwingarme vergleichsweise dicht aneinander. Deshalb läuft das Mähwerk bei der Arbeit auf unebenem Boden infolge des unterschiedlichen Reibungswiderstandes der einzelnen Schneidelemente verhältnismäßig unruhig. Ggf. pendeln die Schneidelemente um eine gedachte senkrechte Achse.

Bei dieser Ausführungsform liegt der zum Anbau erforderliche Profilträger oberhalb der Antriebseinrichtung für das Mähwerk. Dadurch wird die zum Ausheben des Mähwerks in Transportstellung verfügbare Hubhöhe erheblich begrenzt. Außerdem ist die Antriebseinrichtung unterhalb des Profilträgers verhältnismäßig schwer zugänglich, was das Auswechseln der Antriebselemente erheblich behindert. Schließlich ist der Profilträger deshalb zur Bedienung der Maschine von Nachteil, weil er die Sicht nach vorn beeinträchtigt und der Bedienungsperson die Führung der Maschine behindert. Dadurch werden die Vorteile einer solchen ziehenden Betriebsweise für das Mähwerk weitgehend wieder aufgehoben. Es besteht infolgedessen ein Bedürfnis nach Abhilfe, um die Vorzüge der ziehenden Mähwerksanordnung aufrechtzuerhalten, aber zugleich die Handhabung der Maschine zu verbessern und einen einwandfreien Lauf des Mähwerks zu ermöglichen.

Um diese Vorzüge zu erreichen, wird gemäß der Erfindung bei einer Vorrichtung der eingangs bezeichneten Art an dem Dreipunktbock ein beidseitig weit auskragender Querträgre angeordnet, der an jedem äußeren Ende einen in Fahrrichtung weisenden Tragarm besitzt, an dessen freiem Ende ein das Mähwerk führender Lenker angreift. Diese Ausbildung tritt vor allem an die Stelle des bei den vorbekannten Bauformen erforderlichen mittig angeordneten Profilträgers, der sich so hinderlich für die Sicht der Bedienungsperson auswirkt. Durch die Verlagerung der Tragarme nach außen wird der Mittelbereich der Tragvorrichtung frei zugänglich, ohne die Sicht und die Handhabung beim Auswechseln von Antriebsteilen zu behindern. Von besonderer Bedeutung ist aber, daß die der Aufhängung des Mähwerks dienenden Führungselemente beidseitig weit nach außen verlegt werden und daß sie dadurch eine besonders gute Führung des Mähwerks gewährleisten und die lästigen Pendelerscheinungen insbesondere bei unebener Arbeitsfläche vermeiden.

Es liegt im Rahmen der Erfindung, die Lenker als Parallelogramme auszubilden, was die Konstruktion vereinfacht und zugleich die Führung des Mähwerks verbessert. Ggf. können die vorderen Enden der auskragenden Tragarme leicht nach unten abgewinkelt sein, so daß sie eine Parallelogrammseite bilden. Als besonders vorteilhaft hat sich diese Anordnung insofern erwiesen, als, wie der Erfindung weiter vorsieht, diagonal in dem Parallelogramm ein Zylinder oder Stellmotor zum Ausheben des Mähwerks gegenüber dem Tragarm angeordnet sein kann. Dieser Stellmotor ist zweckmäßig an die Schlepperhydraulik angeschlossen, und er kann, je nach Konstruktion entweder durch Hub oder Zug, über das Parallelogramm des jeweiligen Lenkers ein Ausheben des Mähwerks gegenüber den Tragarmen bewerkstelligen bzw. das Mähwerk wieder absenken.

Die von den vorbekannten Bauformen geläufigen Entlastungsfedern lassen sich bei einem weiteren Merkmal der Erfindung ebenfalls diagonal in dem Lenkerparallelogramm unterbringen, wobei es sich als besonders vorteilhaft erwiesen hat, wenn der Aushebezylinder und die Entlastungsfeder eine bauliche Einheit bilden und eine gemeinsame Längsachse aufweisen. So ist zweckmäßig die als

2

Schraubenfeder ausgeführte Entlastungsfeder auf den Zylinder und/oder dessen Kolbenstange aufgesetzt.

Weitere Merkmale, Einzelheiten und Vorteile der Erfindung ergeben sich aus der folgenden Beschreibung einer bevorzug ten Ausführungsform der Erfindung sowie anhand der Zeichnung. Hierbei zeigen:

Fig. 1 eine Seitenansicht der Vorrichtung in schematischer Darstellung und

Fig. 2 eine Draufsicht der Vorrichtung.

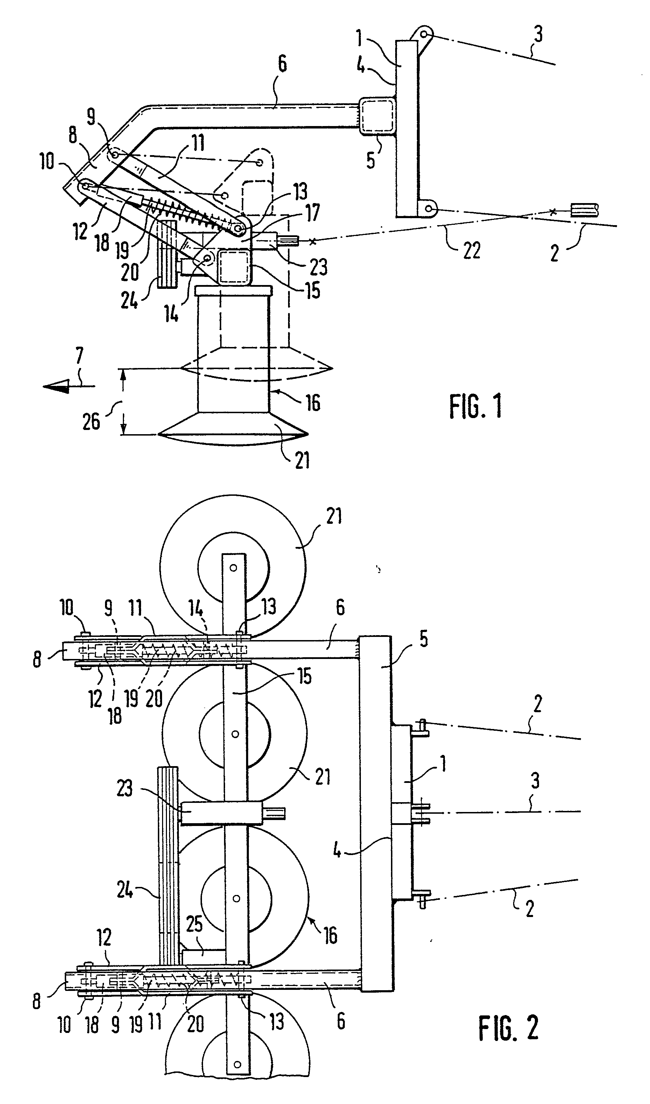

An beispielsweise der Frontseite des nicht dargestellten Schleppers ist der Dreipunktbock 1 mittels der beiden unteren Lenker 2 und des oberen Lenkers 3 in üblicher Weise aufgehängt. An der Stirnseite 4 des Dreipunktbockes 1 ist ein Querträger 5 befestigt, der, wie Fig. 2 erkennen läßt, seitlich so weit auslädt, daß der beim wiedergegebenen Ausführungsbeispiel sich über mehr als die Hälfte der Mähwerkbreite erstreckt. An den beiden äußeren Enden des Querträgers 5 ist je ein Tragarm 6 im etwa rechten Winkel zum Querträger 5 angebracht, die sich in Fahrrichtung 7 der Maschine erstrecken. Das vordere freie Ende 8 der beiden Tragarme 6 ist leicht nach unten abgewinkelt. In diesem abgewinkelten Ende sind die Anlenkstellen 9 und 10 zweier ein Parallelogramm bildender Lenker 11 und 12 angeordnet, deren anderes Ende über die Anlenkpunkte 13 u. 14 an einer am Maschinenrahmen 15 des Mähwerks 16 befestigten Lasche 17 angreifen. Das Parallelogramm wird von den Teilen 8, 11, 12 und 17 gebildet. Diagonal innerhalb des Parallelogramms sind die beiden Anlenkpunkte 10 und 13 durch einen Hubzylinder 18 und dessen ausfahrbare Kolbenstange 19 miteinander verbunden. Auf der Kolbenstange ist eine Schraubenfeder 20 gelagert, die damit mit dem Zylinder 18 eine gemeinsame Längsachse aufweist.

Das Mähwerk 16 besteht bei der wiedergegebenen Ausführungsform aus vier nebeneinander an dem Rahmen 15 gelagerten Trommeln 21. Diese werden von der Schlepperzapfwelle über eine Gelenkwelle 22 und die Zwischenwelle 23 angetrieben. Diese steht über einen Riementrieb 24 mit einem vom Rahmen 15 getragenen Getriebe 25 in Antriebsverbindung.

Wird durch Betätigung des Hubzylinders 18 dessen Kolbenstange 19 ausgefahren, so gelangt der Mähwerksträger 15 mit dem Mähwerk 16 in die in Fig. 1 gestrichelt dargestellte Aushebe-Position. Hierdurch ergibt sich eine dem Maß 26 entsprechende Bodenfreiheit für das Mähwerk. Durch Anheben des Dreipunktbockes 1 läßt sich die Maschine in die Transportstellung überführen und aus dieser in die Arbeitsstellung wieder absenken.

## Ansprüche

1. Vorrichtung zum Anbau eines ziehend betriebenen Mähwerks an dem Dreipunktbock eines Schleppers über entgegen der Fahrrichtung schräg nach unten zu dem Mähwerk verlaufende abgefederte Lenker, dadurch gekennzeichnet, daß an dem Dreipunktbock (1) ein beidseitig weit auskragender Querträger (5) angeordnet ist, der an jedem äußeren Ende einen in Fahrrichtung (7) weisenden Tragarm (6) trägt, an dessen freiem Ende (8) ein das Mähwerk (16) führender Lenker (11,12) angreift.

2. Vorrichtung nach Anspruch 1, dadurch gekennzeichnet, daß die Lenker (11,12) ein Parallelogramm bilden.

3. Vorrichtung nach Anspruch 1 und 2, dadurch gekennzeichnet, daß diagonal in dem Parallelogramm (8,11,12,17) ein Hubzylinder (18) zum Ausheben des Mähwerks (16) gegenüber den Tragarmen (6) angeordnet ist.

4. Vorrichtung nach einem der Ansprüche 1 bis 3, dadurch gekennzeichnet, daß diagonal in dem Parallelogramm (8,11,12,17) wenigstens eine Entlastungsfeder (20) angeordnet ist.

5. Vorrichtung nach einem der Ansprüche 1 bis 4, dadurch gekennzeichnet, daß der Hubzylinder (18) und die Entlastungsfeder (20) eine bauliche Einheit bilden und eine gemeinsame Längsachse aufweisen.

6. Vorrichtung nach einem der Ansprüche 1 bis 5, dadurch gekennzeichnet, daß die freien Enden (8) der Tragarme (6) leicht nach unten abgewinkelt sind.

FIG. 1

FIG. 2